# EUROPÄISCHE PATENTANMELDUNG

(11) **EP 1 862 353 A1**
(43) Veröffentlichungstag der Anmeldung: **05.12.2007**
(21) Anmeldenummer: 07010640.6
(22) Anmeldetag: 29.05.2007
(51) Int. Cl.: B60Q 1/44, B62J 6/04

(54) **Rückleuchte mit Bremslicht und deren Verfahren**

(30) Priorität: 29.05.2006 DE 202006008501 U
(71) Anmelder: Ebel, Matthias, 80333 München (DE)
(72) Erfinder: Ebel, Matthias, 80333 München (DE)
(74) Vertreter: Müller-Boré & Partner Patentanwälte

(57) **Zusammenfassung**

Die Erfindung betrifft eine Rückleuchte mit einem Bremslicht zur Anbringung an einem Fahrzeug umfassend: eine Bremsleuchte (3) und einen Verzögerungsschalter (5), der aufgrund einer Verzögerung des Fahrzeugs einen Bremslichtstromkreis schließt, so daß die Bremsleuchte (3) leuchten kann. Ferner betrifft die Erfindung ein Verfahren zur Steuerung einer Rückleuchte (1) mit einer Bremsleuchte (4) an einem Fahrzeug, die folgende Schritte umfasst: a) Erfassen einer Verzögerung des Fahrzeugs; b) Bestimmen, ob die erfaßte Verzögerung einen vorbestimmten bzw. vorbestimmbaren Schwellwert erreicht oder überschreitet; c) mittelbares oder unmittelbares Ansteuern der Bremsleuchte (4) durch Schließen eines Stromkreises, wenn die erfaßte Verzögerung den vorbestimmten bzw. vorbestimmbaren Schwellwert erreicht oder überschreitet, so daß die Bremsleuchte (4) leuchtet.

## Beschreibung

Die vorliegende Erfindung betrifft eine Rückleuchte mit Bremslicht zur Anbringung an Fahrzeugen, insbesondere Fahrräder und andere muskelbetriebene Fahrzeuge, sowie ein Verfahren hierfür.

Rückleuchten mit Bremslicht sind im Bereich der Kraftfahrzeuge bekannt. Die dort gebräuchlichen Rückleuchten umfassen in der Regel zwei getrennte Leuchtmittel, die als Rücklicht oder als Bremslicht dienen. Das Rücklicht wird bei Eintritt der Dunkelheit manuell eingeschaltet und leuchtet dann dauerhaft. Das Bremslicht wird bei Betätigung der Fahrzeugbremsvorrichtung eingeschaltet und leuchtet solange die Fahrzeugbremseinrichtung betätigt wird. Das Bremslicht leuchtet nicht, wenn das Fahrzeug durch andere Ursachen, beispielsweise ein Herunterschalten oder Betätigen der Feststellbremse, verzögert wird und ist daher nachteilig für andere Verkehrsteilnehmer nicht ersichtlich.

Auch durch Muskelkraft betriebene Fahrzeuge, insbesondere Fahrräder, müssen für Fahrten bei Dunkelheit mit einem Rücklicht ausgestattet sein, welches durch einen zuschaltbaren Dynamo oder eine Batterie mit Strom versorgt wird.

Ferner verfügen diese Fahrzeuge über Bremsvorrichtungen, beispielsweise Hinterrad- und Vorderradbremse, jedoch ist eine Anzeige der Betätigung dieser Bremsvorrichtungen nicht bekannt, so daß bei plötzlichen Ereignissen ein Bremsen nicht signalisiert wird und die nachfolgenden Verkehrsteilnehmer, insbesondere beim Fahren im Konvoi, die Bremswirkung erst spät erkennen, so daß es leicht zu Auffahrunfällen kommen kann.

Es ist daher Aufgabe der Erfindung eine Vorrichtung, insbesondere für Muskelkraft betriebene Fahrzeuge, zur Verfügung zu stellen, welche die Bremswirkung, d.h. das Auftreten einer Verzögerung des Fahrzeugs, anderen Verkehrsteilnehmern zu signalisieren und so die Verkehrssicherheit zu erhöhen.

Diese Aufgabe wird erfindungsgemäß durch die Merkmale der unabhängigen Ansprüche gelöst. Bevorzugte Ausführungsformen der Erfindung ergeben sich aus den Unteransprüchen.

Erfindungsgemäß ist eine Rückleuchte mit Bremslicht zur Anbringung an einem Fahrzeug vorgesehen, die eine Bremsleuchte und einen Verzögerungsschalter umfaßt, der aufgrund einer Verzögerung des Fahrzeugs einen Bremslichtstromkreis (mittelbar oder unmittelbar) schließt, so daß die Bremsleuchte leuchten kann bzw. leuchtet.

Eine Verringerung der Fahrgeschwindigkeit ist Folge einer Verzögerung bzw. einer Bremsbeschleunigung bzw. einer gerichteten Beschleunigung oder Kraft, die entgegen der Fahrtrichtung wirkt. Der Verzögerungsschalter ist sensitiv auf diese Beschleunigung oder Kraft gerichtet und schaltet beim Auftreten einer entsprechenden Verzögerung je nach eingestellter Sensibilität des Schalters die Bremsleuchte ein. Der Verzögerungsschalter nutzt zweckmäßigerweise den Effekt der trägen Masse bzw. Trägheit eines Körpers, der bewegbar an oder in dem Verzögerungsschalter angeordnet ist, so daß der Körper seine Position relativ zum Fahrzeug bei einer Verzögerung des Fahrzeugs aufgrund seiner Massenträgheit, verändert und dadurch ein Schalten bewirken kann.

Vorteilhafterweise ist die Anzeige einer Fahrzeugverzögerung unabhängig von der Betätigung einer Bremsvorrichtung, so daß außerdem die Wirkungen zweier Bremsen gemeinsam oder einzeln durch eine vorgeschlagene Rückleuchte angezeigt werden kann. Dadurch ist mit einem wirtschaftlich und technisch geringen Aufwand ein beachtlicher Sicherheitsvorteil zu erreichen.

In besonders bevorzugter Ausführung umfaßt die Rückleuchte ferner ein Rücklicht.

Zweckmäßigerweise ist das Fahrzeug mit einer Rückleuchte auszurüsten, die zusätzlich zur Beleuchtung bei Dunkelheit ein Bremslicht auch für Tageslichteinsatz aufweist, welches bei einer Verzögerung des Fahrzeugs aufleuchtet, und vorteilhafterweise nicht durch aufwendige Mittel mit den Bremsenvorrichtungen verbunden ist.

Vorteilhafterweise umfaßt die Rückleuchte einen Schalter, durch den das Rücklicht ein- und ausgeschaltet werden kann. Dies kann insbesondere zum Wechsel zwischen einem Betrieb bei Tageslicht und Dunkelheit zweckmäßig sein.

Weiter vorteilhaft umfaßt die Rückleuchte einen Schalter, durch den die Bremsleuchte ausgeschaltet werden kann. Dies kann beispielsweise zweckmäßig sein, wenn das Fahrzeug mittels eines Kraftfahrzeuges transportiert wird.

In einer besonders bevorzugten Ausführung umfaßt die Rückleuchte eine Stromquelle, insbesondere eine (wiederaufladbare) Batterie, so daß die Rückleuchte unabhängig von einem Dynamo oder einer externen Stromquelle arbeiten kann.

Zweckmäßigerweise ist der Verzögerungsschalter innerhalb der Rückleuchte angeordnet oder am Fahrzeug an geeigneter Stelle befestigt und mit der Rückleuchte verbunden. Zweckmäßige Ausführungsformen des Verzögerungsschalters können einen beweglichen Kontaktkörper, insbesondere aus elektrisch leitfähigem Material, aufweisen, der durch ein Vorspannmittel, insbesondere eine Feder, in einer Ausgangsposition gehalten wird. Vorteilhafterweise verändert sich die Position des Kontaktkörpers bei einer Verzögerung des Fahrzeugs in Fahrtrichtung, wodurch ein elektrischer Stromkreis geschlossen wird.

Bevorzugt weist der Verzögerungsschalter zumindest einen Kontakt und einen Kontaktkörper auf, der an ein Vorspannmittel befestigt ist, so daß der Kontaktkörper einen Stromkreis zwischen dem Kontakt und dem Kontaktkörper nur dann schließt, wenn auf das Fahrzeug eine verzögernde Beschleunigung gleich oder größer als ein (vorbestimter bzw. vorbestimmbarer) Verzögerungsschwellwert wirkt.

Ferner wird gemäß der Erfindung ein Verfahren zur Steuerung bzw. Regelung einer Rückleuchte mit einer Bremsleuchte an einem Fahrzeug bereitgestellt, welches folgende Schritte umfasst:
a) Erfassen einer Verzögerung des Fahrzeugs;
b) Bestimmen bzw. Ermitteln, ob die erfaßte Verzögerung einen vorbestimmten bzw. vorbestimmbaren Schwellwert erreicht oder überschreitet;
c) mittelbares oder unmittelbares Ansteuern bzw. Regeln der Bremsleuchte durch Schließen eines Stromkreises, wenn die erfaßte Verzögerung den vorbestimmten bzw. vorbestimmbaren Schwellwert erreicht oder überschreitet, so daß die Bremsleuchte leuchtet.

Gemäß einer bevorzugten Ausführungsform der Erfindung, wird die Erfassung der Verzögerung und/oder die Bestimmung, ob die erfaßte Verzögerung den vorbestimmten bzw. vorbestimmbaren Schwellwert erreicht oder überschreitet, mittels einer auf ein Kontaktelement wirkenden Trägheitskraft durchgeführt.

Bevorzugt schließt eine Verlagerung des Kontaktelements entgegen einer Vorspannkraft den Stromkreis.

Weitere Vorteile und Merkmale der vorliegenden Erfindung ergeben sich aus den nachfolgenden mit Bezug auf die in den Figuren beschriebenen beispielhaften Ausführungsformen, wobei einzelne Merkmale der dargestellten Ausführungsformen zu neuen Ausführungsformen kombiniert werden können. Es zeigen:
- Fig. 1: Schaltplan einer Ausführungsform der erfindungsgemäßen Rückleuchte.
- Fig. 2: eine schematische Darstellung einer ersten Ausführungsform des Verzögerungsschalters.
- Fig. 3: eine schematische Darstellung einer zweiten Ausführungsform des Verzögerungsschalters.
- Fig. 4: eine schematische Darstellung einer dritten Ausführungsform des Verzögerungsschalters.
- Fig. 5: eine schematische Darstellung einer vierten Ausführungsform des Verzögerungsschalters.

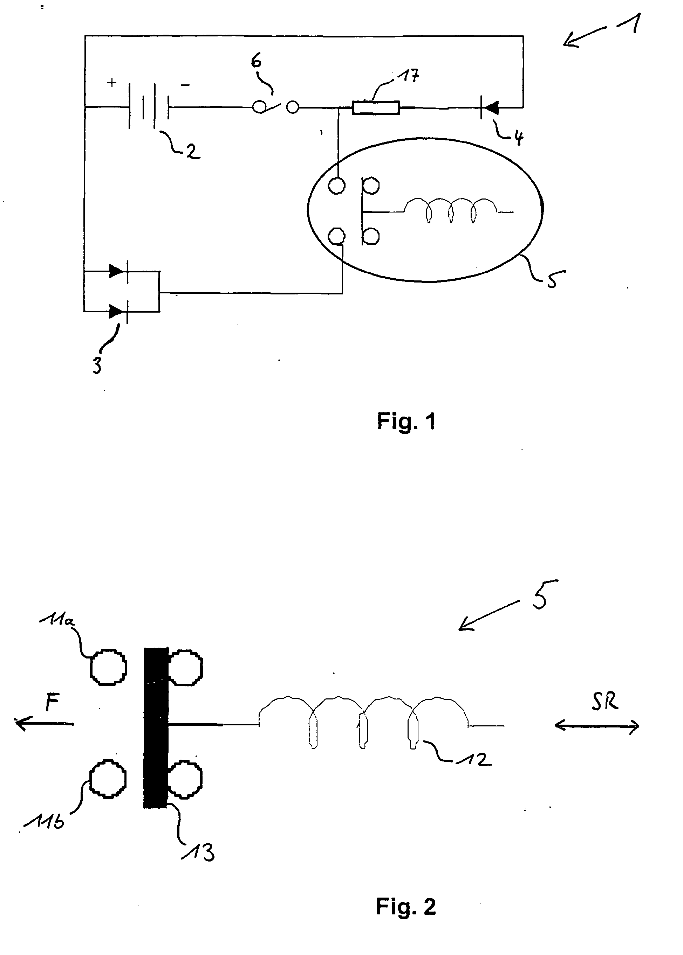

Fig. 1 zeigt den Schaltplan einer bevorzugten Ausführungsform der erfindungsgemäßen Rückleuchte 1. Die elektrische Schaltung umfasst eine Stromquelle 2, beispielsweise einen Dynamo oder eine Batterie, welche ein Rücklicht 4 bei geschlossenem Schalter 6 mit Strom versorgt. Zusätzlich ist zumindest eine Leuchte für ein Bremslicht 3 vorgesehen, welche bevorzugt über einen Verzögerungsschalter 5 angeschlossen ist. Das Rücklicht 4 und das Bremslicht 3 sind in dieser Ausführungsform als LED ausgeführt. Deshalb kann zum Schutz der LED ein Vorwiderstand 17 vorgesehen sein. Vorteilhaft kann das Rücklicht 4 und/oder das Bremslicht 3, insbesondere wenn eine Lichtquelle vorgesehen ist, die eine höhere Stromstärke als eine LED benötigt, durch eine Schaltvorrichtung, z.B. ein Relais, geschaltet werden, die wiederum durch den Verzögerungsschalter 5 geschaltet bzw. gesteuert wird. Das Bremslicht 3 kann einzeln oder in Kombination mit dem Rücklicht 4 betrieben werden. Der Verzögerungsschalter 5 ist zweckmäßigerweise so relativ zur Fahrtrichtung montiert, daß er auf eine Verzögerung im wesentlichen in Fahrtrichtung sensitiv bzw. beschränkt ist. So können anders gerichtete Beschleunigungen, zum Beispiel aufgrund einer unebenen Straße, bevorzugt das Schaltverhalten des Verzögerungsschalter 5 im wesentlichen nicht beeinflussen. Bei Erreichen einer vorbestimmten bzw. vorbestimmbaren Verzögerung in Fahrtrichtung bzw. eines Verzögerungsschwellwertes wird der Verzögerungsschalter 5 ausgelöst und somit der zweite Stromkreis, ggf. mittels einer zwischengelagerten Schaltvorrichtung, geschlossen bzw. aktiviert, so daß die Bremsleuchte 3 leuchtet. Die vorbestimmte bzw. vorbestimmbare Verzögerung in Fahrtrichtung bzw. der Verzögerungsschwellwerte ist vorzugsweise größer als etwa 0,1 m/s² und besonders bevorzugt größer als etwa 1,0 m/s². Bei konstanter Geschwindigkeit, d.h. ohne Auftreten einer Verzögerungsbeschleunigung, geht der Verzögerungsschalter 5 wieder in die Ausgangsposition und der Stromkreis ist offen, so daß die Bremsleuchte 3 nicht leuchtet.

Dementsprechend weist die Schaltung wie bisher eine Stromquelle 2 (Dynamo oder Batterie bzw. Kondensator) auf, welche das Rücklicht 4 nach Drücken des Schalters 6 mit Strom versorgt. Zusätzlich können eine oder mehrere Leuchten bzw. Lichtquellen für das Bremslicht 3 bevorzugt über einen der in Fig. 2 bis Fig. 5 angegebenen Verzögerungsschalter 5 angeschlossen sein. Diese können einzeln oder in Kombination mit dem Rücklicht 4 betrieben werden. Der Verzögerungsschalter 5 ist bevorzugt im wesentlichen horizontal und/oder im wesentlichen parallel zur Fahrtrichtung des Fahrzeugs montiert, so daß dieser maximal auf eine aus dem "normalen" Fahrbetrieb resultierende Verzögerung (d.h. auf die zu erwartende Verzögerungsrichtung) reagieren kann. So kann insbesondere verhindert werden, daß eine unebene Straße den Verzögerungsschalter 5 auslöst. Bei einer Verzögerung bzw. einer entsprechenden Verringerung der Geschwindigkeit wird der Verzögerungsschalter 5 ausgelöst und somit der zweite Stromkreis (direkt oder indirekt) geschlossen und die Bremsleuchte 3 leuchtet. Bevorzugt ist die Leuchtkraft der Bremsleuchte 3 größer als die des Rücklichts 4. Auch können die Bremsleuchte 3 und das Rücklicht 4 miteinander kombiniert werden, so daß ein Schließen des Bremsleuchtschaltkreises eine Erhöhung der Leuchtkraft der kombinierten Leuchte im Vergleich zu der Situation führen, in der lediglich der Rücklichtschaltkreis geschlossen ist. Bei konstanter Geschwindigkeit kehrt der Verzögerungsschalter 5 in seine Ausgangsposition zurück und der Bremsleuchtstromkreis wird geöffnet, so daß die Bremsleuchte 3 nicht mehr leuchtet. In einer nicht dargestellten Variante dieser Ausführungsform ist lediglich ein Kontaktelement 11a vorgesehen, wobei anstelle des zweiten Kontaktes der Stromkreis über die Feder 12 und den Kontaktkörper 13 geführt wird.

Bei der bevorzugten Rückleuchte handelt es sich also um eine verzögerungs- bzw. geschwindigkeitssensible Rückleuchte mit Bremslicht zur Anbringung an alle Arten von Fahrzeugen, die ein Bremssignal unabhängig von Bremsanlagen bzw. deren Bedienung steuert bzw. regelt, und zwar basierend auf der Verzögerung der Geschwindigkeit des Fahrzeugs, wobei die Stromquelle 2 den Stromkreis für das Rücklicht 4 speist, und durch einen Schalter 1 geschlossen bzw. geöffnet werden kann. Gleichzeitig speist die Stromquelle 2 bevorzugt den Stromkreis für die Bremsleuchte 3, die der Verzögerungsschalter 5 gegebenenfalls leuchten läßt.
Fig. 2 zeigt eine schematische Darstellung einer ersten Ausführungsform des Verzögerungsschalters 5, der zwei Kontakte 11a, 11 b und einen Kontaktkörper 13 aufweist, der an ein Vorspannmittel 12 befestigt ist, so daß der Kontaktkörper 13 einen Stromkreis zwischen den Kontakten 11a, 11 b nur dann schließt, wenn auf das Fahrzeug eine verzögernde Beschleunigung bzw. eine Verzögerung gleich oder größer als ein (vorbestimmter bzw. vorbestimmbarer) Schwellwert wirkt.

Der Kontaktkörper 13 ist in dieser Ausführungsform als Kontaktplatte ausgebildet, die durch ein als Feder ausgebildetes Vorspannmittel 12 in einer Ausgangsposition gehalten bzw. positioniert wird, so daß der Stromkreis zwischen den Kontakten 11a und 11b ohne Einwirken einer äußeren Beschleunigung geöffnet ist. In dieser Ausführungsform liegen die Längsachse der Feder 12, d.h. ihre Dehn- bzw. Streckrichtung SR, und die Fahrtrichtung F des Fahrzeuges im wesentlichen parallel zueinander. Bei einer Verzögerung bewegt sich die Kontaktplatte 13 aufgrund ihrer trägen Masse in Fahrtrichtung, streckt die Feder entlang der Streckrichtung SR und schließt bzw. überbrückt somit die zwei Kontakte 11a und 11 b, so daß der Bremsleuchtstromkreis geschlossen wird und das Bremslicht 4 leuchtet. Das Einstellen der vorbestimmten bzw. vorbestimmbaren Verzögerung in Fahrtrichtung F bzw. des Verzögerungsschwellwertes kann beispielsweise durch eine, insbesondere einstellbare, Vorspannung des Vorspannmittels 12 und/oder eine Reibungskraft zwischen dem Kontaktkörper 13 und beispielsweise einer Wandung bzw. einer Führung und/oder eines Reibkörpers erfolgen. Wird das Fahrzeug nicht weiter verzögert bzw. verringert sich die Verzögerung unter den Schwellwert, so übt die gestreckte Feder 12 eine Kraft im wesentlichen entgegen der Fahrtrichtung F auf die Kontaktplatte 13 aus, so daß diese sich wieder in die Ausgangsposition bzw. zu dieser hin bewegt, wodurch der Bremsleuchtstromkreis wieder geöffnet wird und die Bremsleuchte 4 erlischt.

Dementsprechend wird in der in Fig. 2 gezeigten Ausführungsform eine Kontaktplatte 13 durch eine Feder 12 in einer festen bzw. vorbestimmten Ausgangsposition gehalten. Bei einer Verlangsamung bzw. Verzögerung bewegt sich die Kontaktplatte 13 nach vorne bzw. in Fahrtrichtung entgegen der Vorspannkraft der Feder 12 und schließt bei Erreichen bzw. Überschreiten des Verzögerungsschwellwertes die 2 Kontakte 11a, 11 b und damit auch den Stromkreis des Bremlichtes 4, so daß das Bremslicht 4 leuchtet.

Dementsprechend stößt in dieser Ausführungsform des Verzögerungsschalters 5 eine Kontaktplatte 13, die an einer Feder 12 befestigt ist, durch eine Verzögerung bzw. Geschwindigkeitsreduzierung auf die Kontakte 11 und schließt somit den Stromkreis für das Bremslicht 4. In anderen Worten kann in dieser Ausführungsform des Fliehkraft- oder Verzögerungsschalters durch eine Verzögerung bzw. Geschwindigkeitsreduzierung des Schalters 5 oder des Gegenstandes bzw. Fahrzeugs, an dem der Schalter 5 angebracht ist, ein Stromkreis für das Bremslicht 4 geschlossen werden.

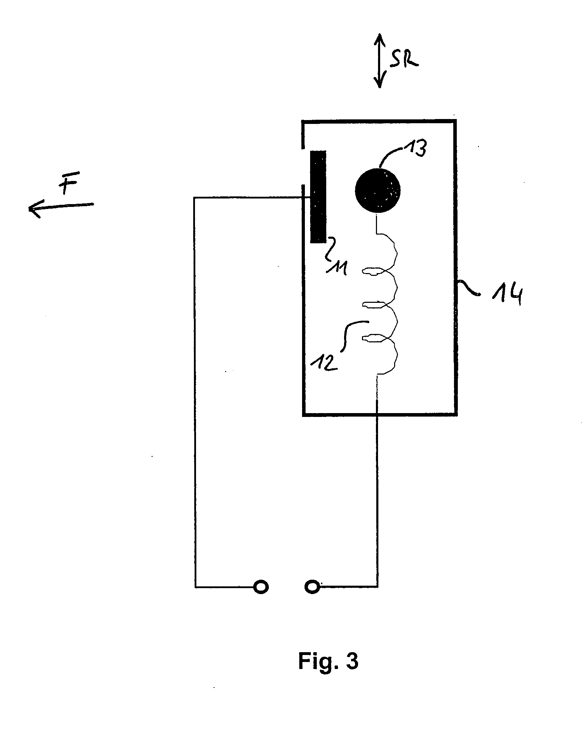

Fig. 3 zeigt eine schematische Darstellung einer zweiten Ausführungsform des Verzögerungsschalters 5. Diese Ausführungsform zeigt einen Verzögerungsschalter 5, der einen Kontakt 11 und einen Kontaktkörper 13 aufweist, welcher an einem Vorspannmittel 12 befestigt ist, so daß der Kontaktkörper 13 einen Stromkreis zwischen dem Kontakt 11 und dem Kontaktkörper 13 nur dann schließt, wenn auf das Fahrzeug eine vorbestimmte bzw. vorbestimmbare Verzögerung wirkt. Der Kontaktkörper 13 der Ausführungsform in Fig. 3 ist als Kugel ausgebildet, die durch ein (bevorzugt als Feder ausgebildetes) Vorspannmittel 12 in einer Ausgangsposition (z.B. ungefähr in der Mitte einer Hülse 14) gehalten wird. In dieser Ausführungsform liegen die Längsachse der Feder 12, d.h. ihre Streckrichtung SR, und die Fahrtrichtung in einem von 0° oder 180° verschiedenen Winkel, bevorzugt im wesentlichen orthogonal zueinander. Wird das Fahrzeug entlang der Fahrtrichtung F verzögert, bewegt sich die Kugel 13 aufgrund ihrer Massenträgheit im wesentlichen in Fahrtrichtung F, wobei die Feder 12 unter einem von 0° oder 180° verschiedenen Winkel zu der Streckrichtung SR gebogen bzw. ausgelenkt wird. Bei Erreichen einer vorbestimmten bzw. vorbestimmbaren Verzögerung in Fahrtrichtung F trifft die Kugel 13 auf eine an der Hülse 14 befestigte bzw. ausgebildete Kontaktplatte 11. Der Strom kann nun durch die Feder 12, Kugel 13 und Kontaktplatte 11 fließen. Der Stromkreis zur Steuerung des Bremslichtes wird dadurch geschlossen, so daß das Bremslicht 4 unmittelbar oder mittelbar durch ein dazwischen geschaltetes Relais zum Leuchten gebracht wird. Kommt das Fahrzeug zum Stillstand, beschleunigt es, oder hält eine konstante Geschwindigkeit bzw. eine Verzögerung kleiner als der vorbestimmten bzw. vorbestimmbaren Verzögerungsschwelle, kehrt die Kugel 13 aufgrund der Federspannung in die Ausgangsposition zurück, in welcher der Stromkreis geöffnet ist und das Bremslicht 4 erlischt.

Das heißt, in dieser Ausführungsform ist ein bevorzugt als Kugel ausgebildetes stromleitendes Auslenkglied 13 an einer Feder 12 befestigt, die es beabstandet von der Kontaktplatte 11 (z.B. in der Mitte der Hülse 14) hält. Wird das Fahrzeug stark verlangsamt (d.h. mit einer Verzögerung gleich oder größer als einen vorbestimmten bzw. vorbestimmbaren Verzögerungsschwellwert), bewegt sich das Auslenkglied 13 in Fahrtrichtung F bzw. nach vorne und trifft auf die an der Hülse 14 befestigte Kontaktplatte 11. Der Strom kann nun durch die Feder 12 und das Auslenkglied 13 auf die Kontaktplatte 11 fließen. Der Stromkreis des Bremslichts 4 wird somit geschlossen und das Bremslicht 4 leuchtet. Kommt das Fahrzeug zum Stehen, beschleunigt oder hat wieder eine konstante Geschwindigkeit bzw. verringert sich die Verzögerung unter den Schwellwert, trennt sich das Auslenkglied 13 von der Kontaktplatte 11, indem es aufgrund der Federkraft der Feder 12 zurück in die mittlere Position geht, und öffnet somit den Stromkreis wieder.

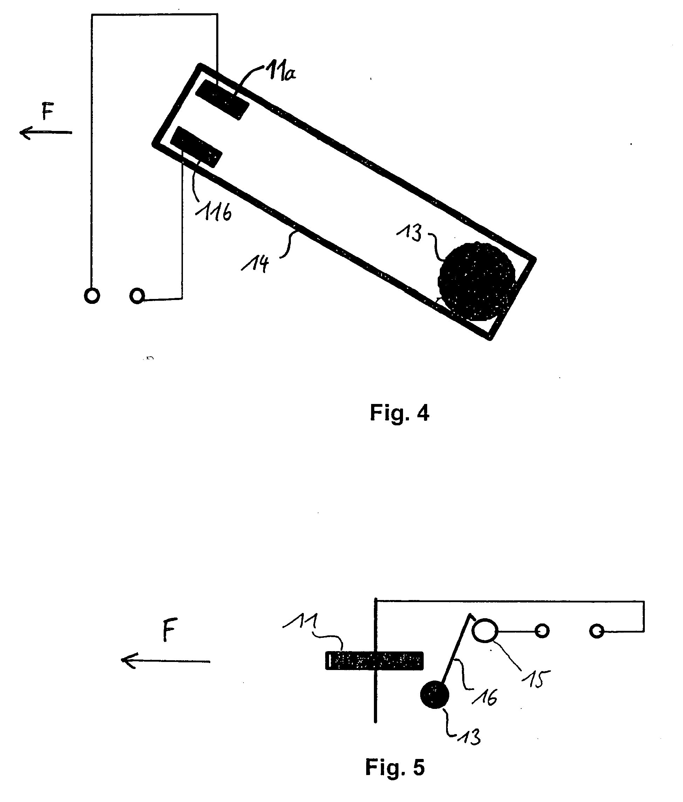

Fig. 4 zeigt eine schematische Darstellung einer dritten Ausführungsform des Verzögerungsschalters 5. Diese Ausführungsform zeigt einen Verzögerungsschalter 5, der eine schräg gestellte Hülse bzw. Rohr 14 aufweist, in der die bevorzugt als Kontaktplatten ausgebildete Kontakte 11a, 11 b und ein Kontaktkörper 13 so angeordnet sind, daß der Kontaktkörper 13 einen Stromkreis zwischen den Kontakten 11a, 11 b schließt, wenn auf das Fahrzeug eine verzögernde Beschleunigung größer als ein vorbestimmter bzw. vorbestimmbarer Schwellenwert wirkt. Der Kontaktkörper 13 der in Fig. 4 dargestellten Ausführungsform ist bevorzugt als Kugel ausgebildet, die in einer schräg angebrachten, entlang der Fahrtrichtung F des Fahrzeuges erhöhten Hülse 14 angeordnet ist. Der Kontaktkörper 13 kann vorzugsweise aus festem Metall, aber auch aus einer leitenden Flüssigkeit (z.B. Quecksilber) ausgebildet werden. Die Hülse 14 umfaßt in einem in Fahrtrichtung F vorne gelegenen Bereich zwei Kontakte 11a, 11b. Die Hülse 14 kann stufenlos an der Seite der Kontakte 11a, 11 b angehoben werden, um die Neigung der Hülse 14 und somit die Sensibilität des Verzögerungsschalters 5, daß heißt die vorbestimmte bzw. vorbestimmbare Verzögerung in Fahrtrichtung F, die ein Schließen des Stromkreises bewirkt, eingestellt werden. Wird das Fahrzeug verlangsamt, rollt die Kugel 13 die Hülse 14 hinauf bzw. bewegt sich der Kontaktkörper 13 zu den Kontakten 11 a, 11 b entgegen der Schwerkraft hin und verbindet schließlich die zwei Kontakte 11 a, 11 b leitend, so daß der Stromkreis dann geschlossen wird und das entsprechende Bremslicht 4 leuchtet. Endet der Bremsvorgang (bzw. fällt die Verzögerung unterhalb des Schwellwertes), rollt die Kugel 13 in die Ausgangsposition zurück und der Stromkreis ist offen. Vorteilhafterweise ist es der Kugel 13 bei unebener Straße oder bei anderes gerichteter Beschleunigung nicht möglich, innerhalb der Hülse 14 derart nach oben zu rollen, um den Stromkreis zu schließen.

Das heißt, in dieser Ausführungsform befindet sich eine Kugel 13 in einer zur Fahrtrichtung F schräg angebrachten Hülse 14. Diese Hülse 14 ist vorne mit zwei Kontaktplatten 11a, 11 b ausgestattet. Die Hülse 14 kann stufenlos an der Seite der Kontaktplatten 11a, 11 b angehoben werden, um die Neigung und somit die Sensibilität des Verzögerungsschalters 5 (d.h. den Schwellwert) einzustellen. Wird das Fahrzeug verlangsamt, rollt die Kugel 13 die Hülse 14 hinauf, stößt schließlich gegen die zwei Kontaktplatten 11a, 11 b und schließt somit den Stromkreis. Das Bremslicht 4 leuchtet. Endet der Bremsvorgang (bzw. ist die Verzögerung unterhalb des Schwellwertes), rollt die Kugel 13 in Ihre Ausgangsposition zurück und der Stromkreis öffnet sich wieder. Bei unebener Straße oder bei Beschleunigung ist es der Kugel 13 vorteilhaft nicht möglich, die Hülse 14 nach oben zu rollen und somit den Stromkreis zu schließen.

Fig.5 zeigt eine schematische Darstellung einer vierten bevorzugten Ausführungsform des Verzögerungsschalters 5. Der Verzögerungsschalter 5 weist einen Kontakt 11 und einen Kontaktkörper 13 auf, der um ein Gelenk 15 drehbar bzw. schwenkbar angeordnet ist, so daß der Kontaktkörper 13 ausgelenkt wird und einen Stromkreis zwischen dem Kontakt 11 und dem Kontaktkörper 13 schließt, wenn auf das Fahrzeug eine verzögernde Beschleunigung wirkt. Der Kontaktkörper 13 dieser Ausführungsform ist eine Masse (z.B. eine Kugel), die ähnlich einem Pendel an einem Gelenk 15 befestigt ist, welches eine drehbare Achse aufweist, so daß sich der Kontaktkörper 13 nur nach in und entgegen der Fahrtrichtung bewegen kann. Somit ist der Verzögerungsschalter im wesentlichen sensitiv gegenüber einer Verzögerung des Fahrzeugs entlang der Fahrrichtung F. Wird das Fahrzeug abgebremst, wirkt auf den Kontaktkörper 13 eine entsprechende Trägheitskraft, so daß sich der Kontaktkörper 13 verschwenkt (d.h. im wesentlichen in Fahrtrichtung F bewegt) und schließlich die Kontaktplatte 11 kontaktiert. Der Stromkreis ist dann geschlossen und das Bremslicht 4 leuchtet.

Kommt das Fahrzeug zum Stillstand, beschleunigt es, oder hält eine konstante Geschwindigkeit, kehrt die Kugel 13 in die Ruheposition zurück, der Stromkreis ist wieder offen und das Bremslicht erlischt. Die Sensibilität des Verzögerungsschalters kann durch eine Veränderung der Höhe der Kontaktplatte 11 variiert werden. In anderen Worten ist in dieser Ausführungsform ein Pendel 16 schwenkbar an einem Gelenk 15 gelagert, an dem ein (z.B. als Kugel ausgebildeter) Kontaktkörper 13 befestigt ist. Das Pendel 16 kann sich entsprechend einer Verzögerung in Fahrtrichtung F nach vorne bewegen und somit nur bei einer Verringerung der Geschwindigkeit reagieren. Wird das Fahrzeug mit einer vorbestimmten bzw. vorbestimmbaren Verzögerungskraft abgebremst, bewegt sich der Kontaktkörper 13 an dem Pendel 16 im wesentlichen in Fahrtrichtung F oder nach vorne und stößt schließlich an die angebrachte Kontaktplatte 11. Der Stromkreis wird somit geschlossen und das Bremslicht 4 leuchtet entsprechend. Fällt die Verzögerung unter den vorbestimmten bzw. vorbestimmbaren Verzögerungswert (z.B. beschleunigt das Fahrzeug oder fährt wieder mit konstanter Geschwindigkeit), entfernt sich der Kontaktkörper 13 von der Kontaktplatte 11 (z.B. schwingt die Kugel 13 wieder in ihre Ausgangsposition zurück), so daß der Stromkreis unterbrochen wird und die Bremsleuchte 4 erlischt. Die Sensibilität kann durch Veränderung der Positionierung (z.B. der relativen Position bzw. Höhe relativ zu dem Gelenk 15) der Kontaktplatte 11 variieren.

Dementsprechend kann die bevorzugte Rückleuchte als Bremslichtsignalausstattung von Fahrrädern und anderen muskelbetriebenen oder durch Menschen angetriebenen Gefährten zusätzlich vorstellbar für jegliche Fortbewegungsmittel zu Lande und zu Wasser, z.B., um beim Runterschalten eines Automobils die Verringerung der Geschwindigkeit auch ohne Bremse anzuzeigen, verwendet werden.

Speziell Fahrzeuge wie Fahrräder müssen für Fahrten bei Dunkelheit mit Front- und Rücklicht ausgestattet sein (Ausführung als Dauerlicht über Dynamo- oder Batteriebetrieb). Außerdem sind zwei Bremsen, nämlich Hinterrad- und Vorderradbremse, vorgeschrieben, jedoch ohne Bremsanzeige. Bei plötzlichen Ereignissen wird eine Bremswirkung nicht signalmäßig angezeigt und die hinterher Fahrenden erkennen die Bremswirkung erst spät, so daß es zu Auffahrunfällen kommen kann. (Radfahrer fahren oft dicht aufgeschlossen im Konvoi).

Dementsprechend kann die bevorzugte Rückleuchte dafür/dazu genutzt werden, das Fahrzeug zusätzlich zur Beleuchtung mit einem Bremslicht auch für Tageslichteinsatz auszurüsten. Hierzu eignet sich eine batterieversorgte Rückleuchte mit einem zusätzlichen Bremslicht, das bei Abbremsung des Fahrzeugs aufleuchtet, ohne über aufwendige Mittel mit den beiden Bremsen verbunden zu sein.

Hierzu wird ein Fliehkraftschalter direkt in die Leuchte integriert oder auch am Fahrzeug an anderer Stelle befestigt und von dort mit der Leuchte verbunden. Der Fliehkraft- oder Geschwindigkeitsverzögerungsschalter kann als
- bewegliche Kontaktplatte an einer Feder (Fig. 2)
- Kugel auf einer Feder in einer Hülse (Fig. 3)
- geneigte Hülse mit Kontaktplatten und Rollkugel (Fig. 4)
- Pendelschalter (Fig. 5)
ausgebildet sein.
Bei Verringerung der Fahrgeschwindigkeit tritt das System je nach eingestellter Sensibilität in Funktion.

Die Vorteile liegen in einer Erhöhung der Verkehrssicherheit. Außerdem wird die Wirkung beider Bremsen gemeinsam oder einzeln über ein von diesen örtlich und elektronisch unabhängiges Modul angezeigt. Es ist also mit einem wirtschaftlich und technisch geringen Aufwand ein beachtlicher Sicherheitsvorteil zu erreichen. Bremslichter für Fahrräder und ähnliche Fahrzeuge sind bisher nicht im Einsatz.

Dementsprechend wird eine geschwindigkeitssensible Rückleuchte bereitgestellt mit Bremslicht zur Anbringung an alle Art von Fahrzeugen, das unabhängig von Bremsanlagen das Bremssignal gibt, basierend ausschließlich auf der Verzögerung der Geschwindigkeit des Fahrzeuges, wobei die Stromquelle 2 den Stromkreis für Rücklicht 4 speist, und durch Schalter 6 geschlossen wie geöffnet werden kann. Gleichzeitig speist die Stromquelle 2 den Stromkreis für die Bremsleuchte 3, die der Verzögerungsschalter 5 gegebenenfalls leuchten lässt.

Insbesondere kann in dem Fliehkraft- oder Verzögerungsschalter eine Geschwindigkeitsreduzierung des Schalters oder des Gegenstandes, an dem der Schalter angebracht ist, ein Stromkreis geschlossen werden.

Ferner, stößt eine Kontaktplatte 13, die an einer Feder 12 befestigt ist, durch eine Geschwindigkeitsreduzierung auf die Kontakte 11a, 11 b und schließt somit den Stromkreis.

Weiterhin sitzt eine Kugel 13 auf einer Feder 12 in einer Hülse 14 und trifft durch eine Geschwindigkeitsreduzierung auf eine Kontaktplatte 11 und schließt somit den Stromkreis. Der Strom fließt über die Feder 12, die Kugel 13 und die Kontaktplatte 11.

Weiterhin ist bevorzugt, daß eine sich in einer Hülse 14 befindliche Kugel 13 bei Geschwindigkeitsreduzierung in der geneigten Hülse 14 nach vorne hoch rollt und an die Kontaktplatten 11a, 11b anstößt. Somit wird der Stromkreis über die Kugel geschlossen.

Gemäß dem Verzögerungsschalter aus Fig 5 ist bevorzugt, daß sich eine Kugel 13, befindlich am unteren Ende des Pendels 16, über ein Gelenk 15 bei einer Geschwindigkeitsreduzierung nach vorne bewegt und die Kontaktplatte 11 berührt. Der Stromkreis wird somit über das Gelenk 15, das Pendel 16, die Kugel 13 und die Kontaktplatte 11 geschlossen.

### Bezugszeichenliste

- 1: Rückleuchte
- 2: Stromquelle
- 3: Bremsleuchte
- 4: Rücklicht
- 5: Verzögerungsschalter
- 6: Schalter
- 11: Kontakt
- 12: Vorspannmittel
- 13: Kontaktkörper
- 14: Hülse
- 15: Gelenk
- 16: Pendel
- 17: Vorwiderstand

## Patentansprüche

1. Rückleuchte mit Bremslicht zur Anbringung an einem Fahrzeug umfassend: eine Bremsleuchte (3) und einen Verzögerungsschalter (5), der aufgrund einer Verzögerung des Fahrzeugs einen Bremslichtstromkreis schließt, so daß die Bremsleuchte (3) leuchten kann.

2. Rückleuchte nach Anspruch 1, wobei die Rückleuchte weiterhin ein Rücklicht (4) umfaßt, wobei die Rückleuchte bevorzugt einen Schalter (1) umfaßt, durch den zumindest das Rücklicht (4) ein- und ausgeschaltet werden kann.

3. Rückleuchte nach einem der vorhergehenden Ansprüche, wobei die Rückleuchte einen Schalter (1) umfaßt, durch den die Bremsleuchte (3) ausgeschaltet werden kann.

4. Rückleuchte nach einem der vorhergehenden Ansprüche, wobei die Rückleuchte eine Stromquelle (2) umfaßt.

5. Rückleuchte nach einem der vorhergehenden Ansprüche, wobei der Verzögerungsschalter (5) zumindest einen Kontakt (11) und einen Kontaktkörper (13) aufweist, der an ein Vorspannmittel (12) befestigt ist, so daß der Kontaktkörper (13) einen Stromkreis zwischen dem Kontakt (11) und dem Kontaktkörper (13) nur dann schließt, wenn auf das Fahrzeug eine verzögernde Beschleunigung gleich oder größer als ein Verzögerungsschwellwert wirkt.

6. Rückleuchte nach einem der vorhergehenden Ansprüche, wobei der Verzögerungsschalter (5) eine schräg gestellte Hülse (14) aufweist, in der ein oder mehrere Kontakte (11a, 11b) und ein Kontaktkörper (13) so angeordnet sind, daß der Kontaktkörper (13) einen Stromkreis zwischen den Kontakten (11a, 11 b) schließt, wenn auf das Fahrzeug eine verzögernde Beschleunigung wirkt.

7. Rückleuchte nach einem der vorhergehenden Ansprüche, wobei der Verzögerungsschalter (5) einen Kontakt (11) und einen Kontaktkörper (13) aufweist, der um ein Gelenk (16) drehbar angeordnet ist, so daß der Kontaktkörper (13) ausgelenkt wird und einen Stromkreis zwischen dem Kontakt (11) und dem Kontaktkörper (13) schließt, wenn auf das Fahrzeug eine verzögernde Beschleunigung wirkt.

8. Verfahren zur Steuerung einer Rückleuchte (1) mit einer Bremsleuchte (4) an einem Fahrzeug, umfassend die Schritte:
a) Erfassen einer Verzögerung des Fahrzeugs;
b) Bestimmen, ob die erfaßte Verzögerung einen vorbestimmten bzw. vorbestimmbaren Schwellwert erreicht oder überschreitet;
c) mittelbares oder unmittelbares Ansteuern der Bremsleuchte (4) durch Schließen eines Stromkreises, wenn die erfaßte Verzögerung den vorbestimmten bzw. vorbestimmbaren Schwellwert erreicht oder überschreitet, so daß die Bremsleuchte (4) leuchtet.

9. Verfahren nach Anspruch 8, wobei die Erfassung der Verzögerung und/oder die Bestimmung, ob die erfaßte Verzögerung den vorbestimmten bzw. vorbestimmbaren Schwellwert erreicht oder überschreitet oder mittels einer auf ein Kontaktelement (13) wirkenden Trägheitskraft durchgeführt wird.

10. Verfahren nach Anspruch 9, wobei eine Verlagerung des Kontaktelements (13) entgegen einer Vorspannkraft den Stromkreis schließt.
